# EUROPEAN PATENT APPLICATION

(11) **EP 3 628 828 A1**
(43) Date of publication of application: **01.04.2020**
(21) Application number: 19193752.3
(22) Date of filing: 27.08.2019
(51) Int. Cl.: F01D 17/16, F01D 25/24, F04D 29/56

(54) **A CASING ASSEMBLY FOR A GAS TURBINE ENGINE**

(30) Priority: 25.09.2018 GB 201815599
(71) Applicant: Rolls-Royce plc, London N1 9FX (GB)
(72) Inventor: Neelambaran, Karapurath, Derby, Derbyshire DE24 8BJ (GB)
(74) Representative: Rolls-Royce plc

(57) **Abstract**

There is described a casing assembly for a gas turbine engine, the casing assembly comprising: an annular casing having a longitudinal axis; a unison ring assembly configured for rotation about the longitudinal axis; a plurality of vanes rotatably coupled to the annular casing; and a plurality of linkages, wherein each of the plurality of vanes is coupled to the unison ring assembly by a respective one of the plurality of linkages. Each linkage comprises: a first link coupled to the respective vane; and a second link rotatably coupled to the first link and rotatably coupled to the unison ring assembly, such that rotation of the unison ring assembly about the longitudinal axis effects rotation of the respective vane.

## Description

The present disclosure relates to a casing assembly for a gas turbine engine

Existing gas turbine engines comprise compressor systems having a plurality of variable inlet guide vanes and a plurality of variable stator vanes. The variable inlet guide vanes and the variable stator vanes may be rotatable about their axes so as to optimise the performance of the gas turbine engine. In order to achieve such rotation, a casing assembly comprising an actuator, an actuator control rod, a crankshaft, a plurality of stage control rods, a plurality of bridge plates, a plurality of unison rings and a plurality of levers connected in series to the variable inlet guide vanes and the variable stator vanes may be provided. However, such an arrangement is complex, expensive to manufacture and occupies a relatively large volume within the gas turbine engine.

It is therefore desirable to provide an improved casing assembly for a gas turbine engine that overcomes these issues.

According to an aspect of the present disclosure there is provided a casing assembly for a gas turbine engine, the casing assembly comprising: an annular casing having a longitudinal axis; a unison ring assembly configured for rotation about the longitudinal axis; a plurality of vanes rotatably coupled to the annular casing; and a plurality of linkages. Each of the plurality of vanes is coupled to the unison ring assembly by a respective one of the plurality of linkages. Each linkage comprises: a first link coupled to the respective vane; and a second link rotatably coupled to the first link and rotatably coupled to the unison ring assembly, such that rotation of the unison ring assembly about the longitudinal axis effects rotation of the respective vane.

The unison ring assembly may be configured for movement on a single plane.

The second link of each of the linkages may be rotatably coupled to its respective first link about a first axis of rotation that is substantially perpendicular to the longitudinal axis.

The second link of each of the linkages may be rotatably coupled to the unison ring assembly about a second axis of rotation that is substantially perpendicular to the longitudinal axis.

The first link of each of the linkages may be fixedly coupled to its respective vane.

The second link of each of the linkages may be rotatably coupled to its respective first link and/or the unison ring assembly by a hinge joint.

The second link of each of the linkages may be rotatably coupled to its respective first link and/or the unison ring assembly by a universal joint.

The second link of each of the linkages may be rotatably coupled to its respective first link and/or the unison ring assembly by a spherical joint.

Two or more of the first links or two or more of the second links may have two or more different lengths.

The unison ring assembly may comprise two or more unison rings spaced from each other. The second links of each of the linkages may be rotatably coupled to the two or more unison rings.

The two or more unison rings may be connected by one or more connecting rods.

Each of the two or more unison rings may comprise a plurality of clevises. The second links of each of the linkages may be rotatably coupled to the unison ring assembly via a respective one of the plurality of clevises.

Each of the two or more unison rings may comprise a plurality of projections extending towards the longitudinal axis. The annular casing may comprise a plurality of grooves or slots for receiving the plurality of projections and locating the two or more unison rings relative to the annular casing.

The two or more unison rings may be substantially planar.

The plurality of vanes may be a plurality of stator vanes and/or a plurality of inlet guide vanes.

A gas turbine engine may comprise a casing assembly as described in any preceding statement.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a perspective view of a casing assembly of a high pressure compressor of the gas turbine engine;
Figure 5 is a perspective view of a unison ring assembly of the casing assembly;
Figure 6 is a close-up perspective view of a plurality of linkages of the casing assembly;
Figure 7 is a close-up perspective view of one of the linkages of the casing assembly;
Figure 8 is a cross-sectional view of the connection between a unison ring of the unison ring assembly and a casing;
Figure 9 is a plan view of a plurality of linkages with the unison ring located at a first position;
Figure 10 is a plan view of a plurality of linkages with the unison ring located at a second position;
Figure 11 is a cross-sectional view of an alternative connection between an alternative unison ring and an alternative casing; and
Figure 12 is a further cross-sectional view of the alternative connection between the alternative unison ring and the alternative casing taken in a direction perpendicular to the cross-sectional view of Figure 11.

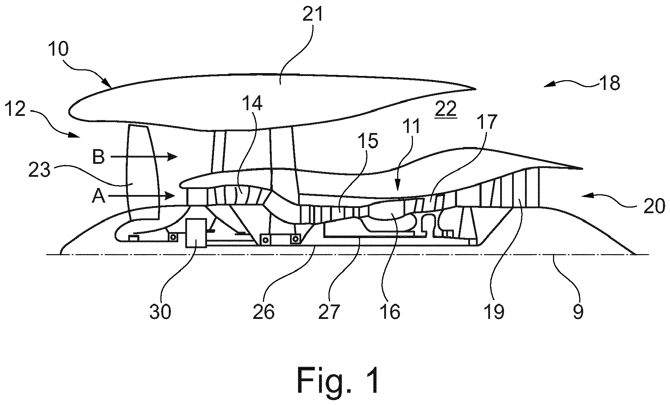

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

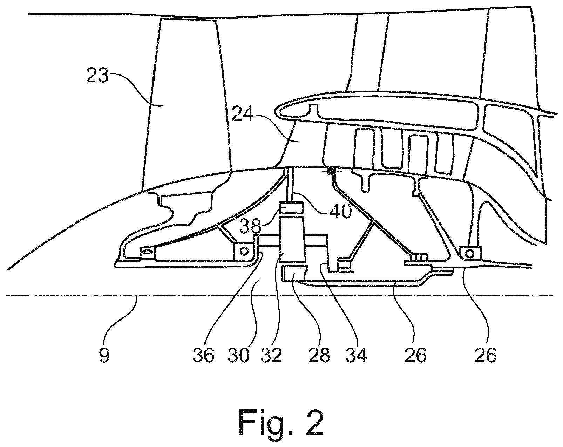

An exemplary arrangement for a geared fan gas turbine engine 10 is shown in **Figure 2**. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

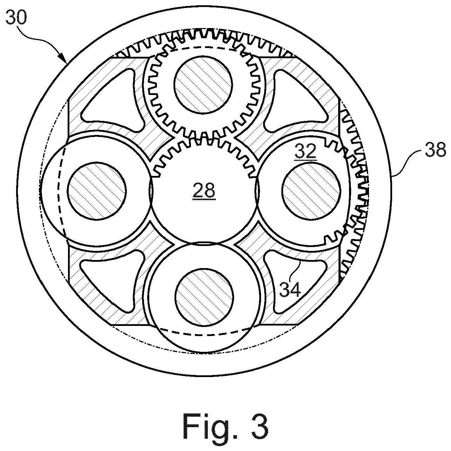

The epicyclic gearbox 30 is shown by way of example in greater detail in **Figure 3**. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

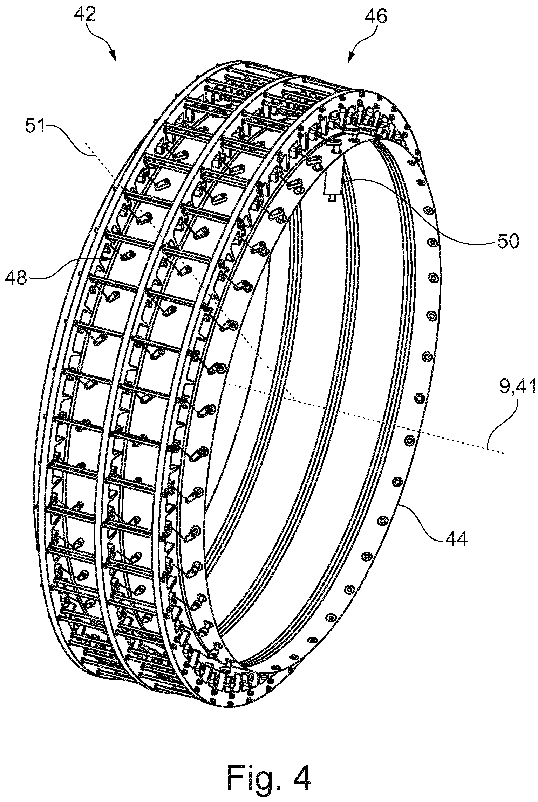

**Figure 4** is a perspective view of a casing assembly 42 of a high pressure compressor, such as the high pressure compressor 15 described with reference to Figures 1 and 2. The casing assembly 42 generally comprises a casing 44, a unison ring assembly 46, a plurality of linkages 48 and a plurality of vanes 50. Although only a single vane 50 is shown in Figure 4 for clarity, each of the linkages 48 is connected to a separate vane 50. The vanes 50 may be variable inlet guide vanes and/or variable stator vanes.

The casing 44 and the unison ring assembly 46 each have annular profiles. The longitudinal axes of the annular casing 44 and the annular unison ring assembly 46 (i.e. the axes around which the casing 44 and the unison ring assembly 46 extend) are aligned with a longitudinal axis 41 of the casing assembly 42 (i.e. the axis around which the casing assembly 42 extends). The longitudinal axis 41 of the casing assembly 42 is aligned with the principal rotational axis 9. Accordingly, the casing 44, the unison ring assembly 46 and the casing assembly 42 extend around the principal rotational axis 9. The unison ring assembly 46 is configured for rotation about the longitudinal axis 41. The unison ring assembly 46 is configured for movement on a single plane perpendicular to the longitudinal axis 41, and does not move in an axial direction along the longitudinal axis 41.

The casing 44 is disposed within the unison ring assembly 46, such that the unison ring assembly 46 extends around the casing 44. The plurality of vanes 50 are disposed within the casing 44, such that the casing 44 extends around the vanes 50. The plurality of vanes 50 are disposed circumferentially around the longitudinal axis 41. The plurality of vanes 50 are arranged in three distinct rows (i.e. on three distinct planes) disposed along the longitudinal axis 41. The plurality of vanes 50 are each configured for rotation about respective axes 51 oriented perpendicularly to the longitudinal axis 41.

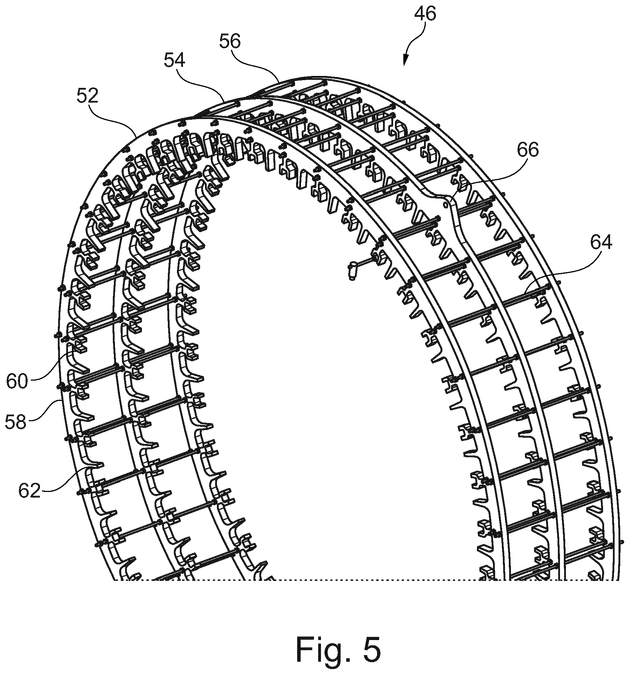

**Figure 5** is a perspective view of the unison ring assembly 46 in isolation. The unison ring assembly 46 comprises a first unison ring 52, a second unison ring 54 and a third unison ring 56. Each unison ring 52, 54, 56 comprises an outer ring portion 58 and a series of alternating clevises 60 and projections or centralisers 62 extending radially inwards from the outer ring portion 58 towards the longitudinal axis 41 around the circumference of the unison rings 52, 54, 56. The projections 62 and the clevises 60 are integrally formed with the outer ring portion 58. Accordingly, each of the unison rings 52, 54, 56 may be cut out of a single plate of metal using laser cutting or water jet cutting processes.

The outer ring portions 58 are provided with a plurality of axially extending holes. The plurality of axially extending holes are disposed circumferentially around the outer ring portions 58 and are spaced at two distinct radial distances from the longitudinal axis 41. Accordingly, the axially extending holes are arranged in pairs of concentric circles. A plurality of identical threaded connecting rods 64 extend through corresponding axially extending holes of the first, second and third unison rings 52, 54, 56 and are fixed to each of the first, second and third unison rings 52, 54, 56 by bolts. Accordingly, the first, second and third unison rings 52, 54, 56 are secured together to form a squirrel-cage structure that provides good out-of-plane stiffness. The first, second and third unison rings 52, 54, 56 are substantially identical, with the exception of a tab 66 that extends outwards from the outer ring portion 58 of the second unison ring 54 and which contains a hole for direct connection to an actuator.

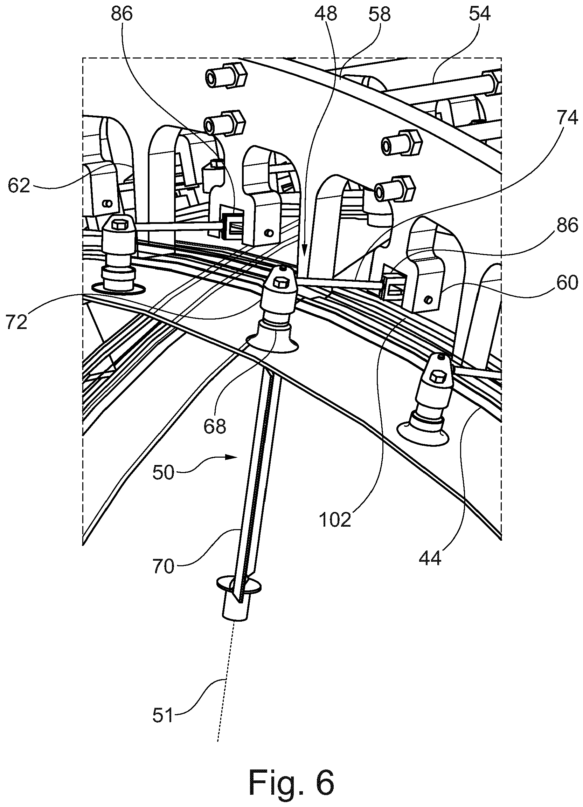

**Figure 6** is a close-up perspective view of the casing assembly 42 showing one of the vanes 50 and its respective linkage 48 in detail. The casing 44 is provided with a plurality of through holes 68 directed towards the longitudinal axis 41. The vane 50 extends through the through hole 68 such that a radially outer end thereof is disposed outside of the casing 44 and such that an aerofoil portion 70 thereof is disposed within the casing 44. The longitudinal axis of the vane 50 is aligned with the axis 51. The vane 50 is able to rotate within the through hole 68 about the axis 51. The linkage 48 comprises a first link or lever 72 and a second link 74. A first end of the first link 72 is fixedly coupled to the radially outer end of the vane 50. A second end of the first link 72 is pivotally coupled to a first end of the second link 74. A second end of the second link 74 is pivotally coupled to the clevis 60. The first and second links 72, 74 are manufactured using a metal injection moulding (MIM) process.

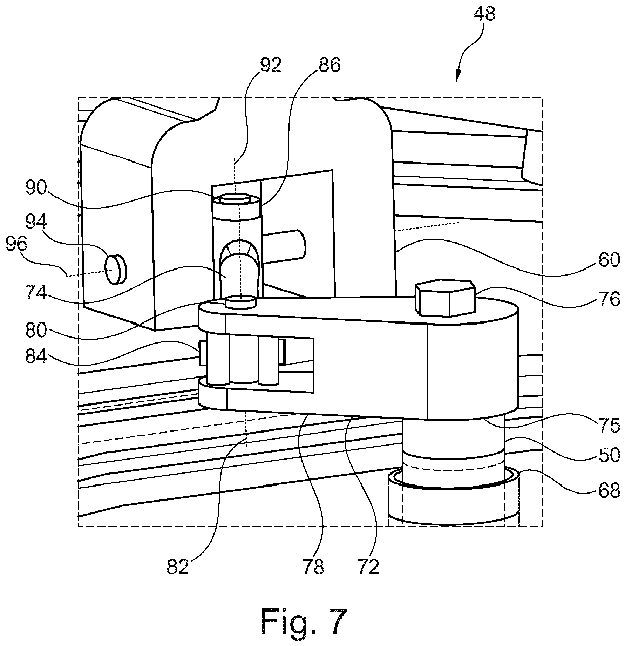

**Figure 7** is a further close-up perspective view showing one of the linkages 48. As shown, the radially outer end of the vane 50 is provided with a shoulder 75 against which the first end of the first link 72 is secured by a bolt 76. Accordingly, the first link 72 and the vane 50 are unable to move relative to each other. The second end of the first link 72 comprises a clevis 78 formed by two arms separated by a gap. Each of the arms comprises a through hole, through which a first pin 80 extends. The first pin 80 is rotatable within the through holes about an axis 82 that is substantially oriented towards and perpendicular to the longitudinal axis 41. The first end of the second link 74 comprises a notch within which the first pin 80 is located. A second pin 84 extends through the second link 74 and the first pin 80 so as to secure the second link 74 to the first pin 80. The second link 74 is therefore able to pivot relative to the first link 72 about the axis 82. The connection between the second link 74 and the first link 72 is a hinge joint that allows motion on a single plane. However, as outlined below, it may alternatively be a different type of joint such as a universal joint or a spherical joint formed by a spherical bearing.

With reference to both Figures 6 and 7, the second end of the second link 74 comprises a clevis 86 formed by two arms separated by a gap. Each of the arms comprises a through hole, through which a third pin 90 extends. The third pin 90 is rotatable within the through holes about an axis 92 that is substantially oriented towards and perpendicular to the longitudinal axis 41. The clevis 60 of the unison ring 52 is likewise formed by two arms separated by a gap. Each of the arms comprises a through hole through which a fourth pin 94 extends. The fourth pin 94 is rotatable within the through holes about an axis 96 extending circumferentially with respect to the unison ring 52. The fourth pin 94 is fixedly connected to the third pin 90. The second link 74 is therefore rotatable about the axes 92 and 96. The connection between the second link 74 and the unison ring 52 is a universal joint allowing relative movement of the two components about multiple axes.

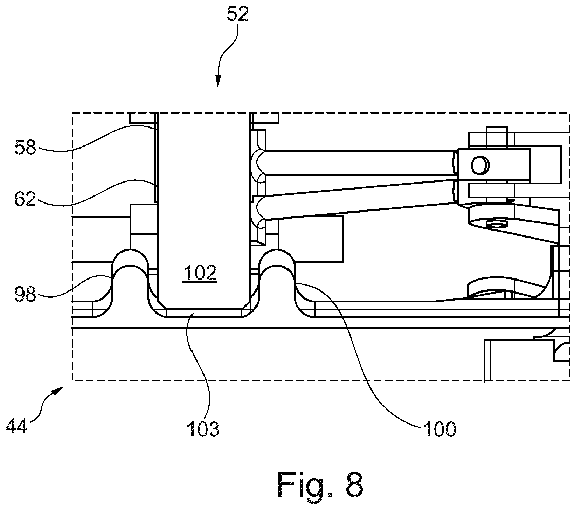

**Figure 8** is a cross-sectional view of the connection between the unison ring 52 and the casing 44. The casing 44 comprises a first flange 98 and a second flange 100. The first and second flanges 98, 100 are spaced apart from each other so as to define a groove or slot 102. A low-friction pad or coating 103 is disposed at the base of the groove 102. The first and second flanges 98, 100, the groove 102 and the low-friction pad 103 extend around the circumference of the casing 44 (see Figures 4 and 6). The projection 62 is located within the groove 102, is supported by the low-friction pad 103 and is able to slide along the groove 102 in a circumferential direction. Accordingly, the unison ring assembly 46 can be rotated about the longitudinal axis 41 (i.e. in a circumferential direction) via actuation of the actuator. The first and second flanges 98, 100 prevent the projection 62 and thus the unison ring 52 and the unison ring assembly 46 as a whole moving in an axial direction, along the longitudinal axis 41 and along the casing 44. Further, since a plurality of projections 62 are provided that are disposed around the circumference of the unison rings 52, 54, 56 (i.e. around the principal longitudinal axis 41), the unison ring assembly 46 is centred with respect to the casing 44. Accordingly, deformation of the unison rings 52, 54, 56 (e.g. from a circular shape to an oval shape) is prevented. Since the unison ring assembly 46 has good out-of-plane stiffness, the number of projections 62 can be minimised.

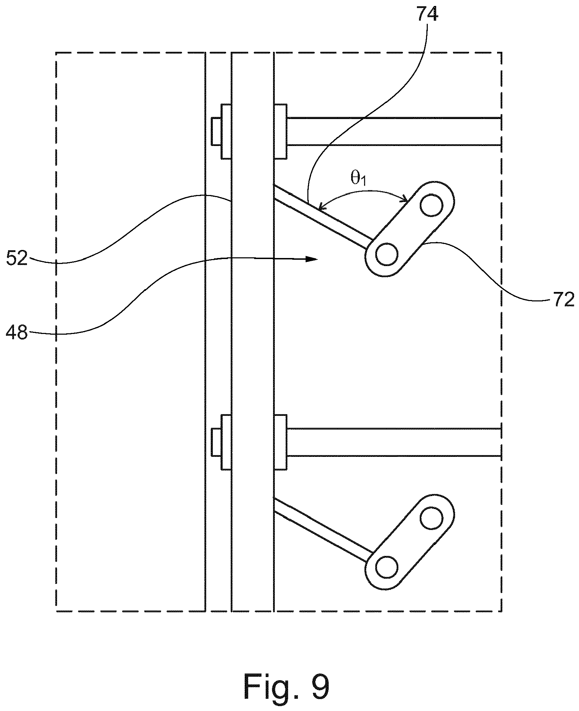

**Figure 9** is a plan view of a pair of adjacent linkages 48, with the unison ring 52 located at a first position. In the configuration shown in Figure 9, the unison ring 52 is positioned at a relatively downwards position as viewed from Figure 9 and a relatively anti-clockwise position as viewed from the right-hand side of Figure 4. In the configuration shown in Figure 9, the distance between the coupling between the vane 50 and the first link 72 and the coupling between the second link 74 and the unison ring 52 (i.e. the distance between axes 51, 92) is relatively small. Accordingly, in order to accommodate the lengths of the first link 72 and the second link 74, it is necessary for the first link 72 to be pivoted to a relatively anti-clockwise position as viewed from Figure 9, such that a relatively small angle θ₁ is formed between the first link 72 and the second link 74 and a relatively large angle is formed between the first link 72 and the longitudinal axis 41.

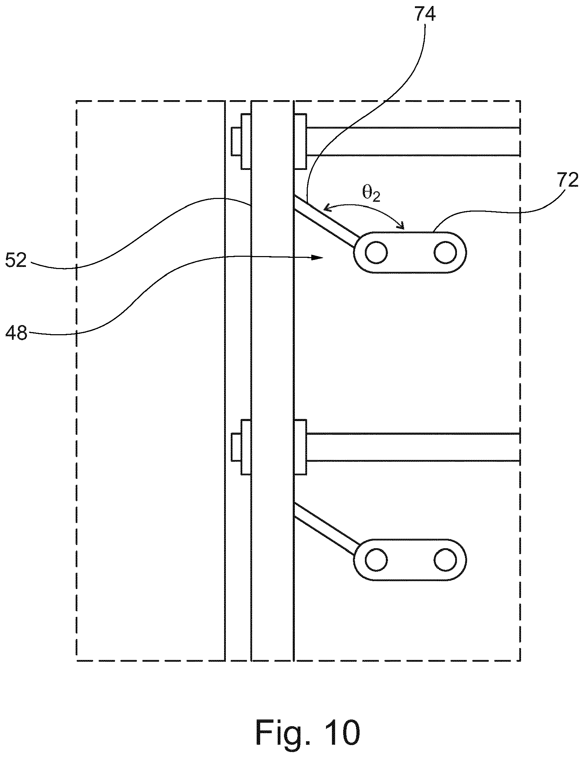

**Figure 10** is a plan view of a pair of adjacent linkages 48, with the unison ring 52 located at a second position. In the configuration shown in Figure 10, the unison ring 52 is positioned at a relatively upwards position as viewed from Figure 10 (as shown by the difference between the positions of the connecting rods 64 in Figures 9 and 10) and a relatively clockwise position as viewed from the right-hand side of Figure 4. In the configuration shown in Figure 10, the distance between the coupling between the vane 50 and the first link 72 and the coupling between the second link 74 and the unison ring 52 (i.e. the distance between axes 51, 92) is relatively large. Accordingly, in order to accommodate the lengths of the first link 72 and the second link 74, it is necessary for the first link 72 to be pivoted to a relatively clockwise position as viewed from Figure 10 such that a relatively large angle θ₂ is formed between the first link 72 and the second link 74 and a relatively small angle is formed between the first link 72 and the longitudinal axis.

As mentioned previously, the first link 72 is secured to the vane 50 such that they are unable to move relative to each other. Accordingly, when the unison ring 52 is positioned as shown in Figure 9, the vane 50 is rotated to a relatively anti-clockwise position as viewed from Figure 9, thereby reducing the flow area through the compressor. Likewise, when the unison ring 52 is positioned as shown in Figure 10, the vane 50 is rotated to a relatively clockwise position as shown in Figure 10, thereby increasing the flow area through the compressor. Accordingly, by actuating the actuator and thus the position of the unison ring assembly 46, the angle of the vane 50 and the performance of the compressor can be changed.

The desired range of motion of the vane 50 may change before or after manufacture of the gas turbine engine 10. In such circumstances, the range of motion of the vane 50 may be changed simply by changing the length of the first and/or second link 72, 74. This has minimal effect on surrounding components within the casing assembly 42 and gas turbine engine 10 as a whole. Accordingly, the need for significant redesign of the casing assembly 42 or the gas turbine engine 10 as a whole is prevented. In some circumstances, it may be preferable to change the length of the second link 74 whilst keeping the length of the first link 72 the same. In other circumstances, it may be preferable to change the length of the first link 72 whilst keeping the length of the second link 74 the same. The range of motion of the vane 50 may alternatively or additionally be modified by changing the distance between the unison ring 52 and the axis around which the vane 50 rotates (i.e. the axial distance between the axes 51 and 92). The lengths of the first and second links 72, 74 and the distance between the unison ring 52 and the axis around which the vanes 50 rotate may be different for different row of vanes 50 so as to effect different amounts of rotation of the vanes 50 within different rows.

By way of example, in a casing assembly 42 having a first sizing, the length of the first link 72 is 50 millimetres, the length of the second link 74 is 35 millimetres and the distance between the axis along which the unison ring 52 rotates and the axis about which the vane 50 rotates is 45 millimetres. This results in a total range of unison ring 52 travel of approximately 37 millimetres and a range of motion of the vane 50 of approximately 48 degrees. In a casing assembly 42 having a second sizing, the length of the first link 72 is 50 millimetres, the length of the second link 74 is 70 millimetres and the distance between the axis along which the unison ring 52 rotates and the axis about which the vane 50 rotates is 80 millimetres. This results in a total range of unison ring 52 travel of approximately 37 millimetres and a range of motion of the vane 50 of approximately 37 degrees.

The linkages 48 act as straight line linkages or straight line mechanisms. The linkages 48 allow the unison ring assembly 46 to be rotated in a circumferential direction (i.e. around the longitudinal axis 41) without moving axially (i.e. along the longitudinal axis 41). Since each of the unison rings 52, 54, 56 do not move axially, they can be connected to form a single unison ring assembly 46 that can be controlled directly by a single actuator. Accordingly, there is no need for the unison rings 52, 54, 56 to be controlled individually, such as via a plurality of control rods connected to a crankshaft, as is typically done in existing casing assemblies. The need for a plurality of control rods and crankshaft is therefore avoided. As mentioned above, the lengths of the first and second links 72, 74 and the distance between the unison ring 52 and the axis around which the vanes 50 rotate may be different for different rows of vanes 50, such that rotation of the unison ring assembly 46 effects different amounts of rotation in different vanes 50.

By reducing the number of components relative to existing casing assemblies, the size of the casing assembly 42 can be reduced, thereby allowing the casing assembly 42 to fit within existing gas turbine engines 10, as well as gas turbine engines having less available space for the casing assembly 42. Further, by both reducing the number of components and providing multiple components that are identical or substantially identical to each other (e.g. the first, second and third unison rings 52, 54, 56 and the connecting rods 64), the casing assembly 42 is simple, quick and inexpensive to manufacture.

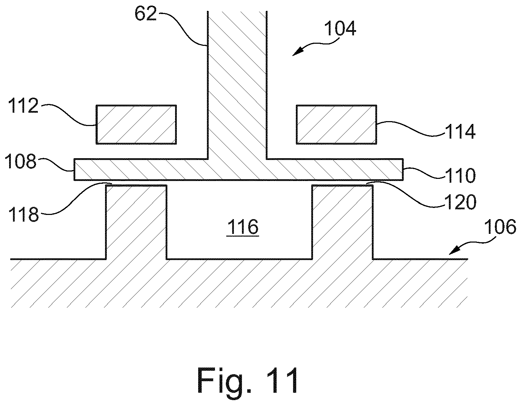

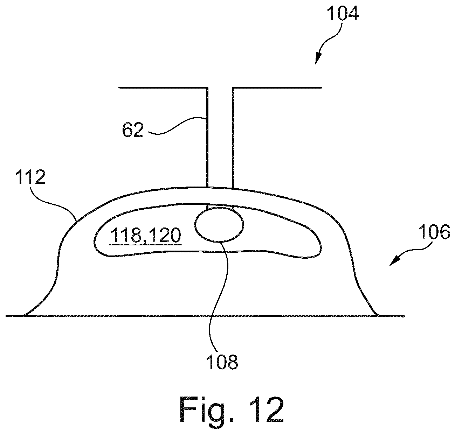

An additional benefit of providing a casing assembly 42 that does not move axially is that the connection between the unison ring assembly 46 and the casing 44 can be relatively simple in comparison to existing designs. One example of such a simple connection has already been described with reference to Figure 8. Alternative simple connections between unison ring assemblies and casings may alternatively be provided, such as that shown in Figures 11 and 12.

**Figures** 11 and 12 are cross-sectional views of a connection between an alternative unison ring 104 and an alternative casing 106. The orientation of the cross-sectional plane of Figure 11 corresponds that of Figure 8. The cross-sectional plane of Figure 12 is perpendicular to the cross-sectional plane of Figure 11. The alternative unison ring 104 substantially corresponds to the unison ring 52. However, a first pin 108 and a second pin 110 extend from a distal end (i.e. a radially inner end) of the projection 62. The alternative casing 106 comprises an alternative first flange 112 and an alternative second flange 114 that are spaced apart from each other so as to define a groove 116. As best shown in Figure 12, the alternative first and second flanges 112, 114 only extend part way around the circumference of the alternative casing 106. The alternative first and second flanges 112, 114 are provided with a first slot 118 and a second slot 120, respectively. The first and second pins 108, 110 extend through and are supported by the first and second slots 118, 120, respectively. In alternative arrangements one or more rollers could run along the first and second slots 118, 120, rather than the first and second pins 108, 110.

Although it has been described that the connection between the second link 74 and the first link 72 is a hinge joint and that the connection between the second link 74 and the unison ring 52 is a universal joint, in alternative arrangements both the connection between the second link 74 and the first link 72 and the connection between the second link 74 and the unison ring 52 may be universal joints. This may increase the amount by which the unison ring assembly 46 is able to rotate about the longitudinal axis 41 upon actuation by the actuator. In further alternative arrangements, the connection between the second link 74 and the first link 72 may be a universal joint and the connection between the second link 74 and the unison ring 52 may be a hinge joint. In yet further alternative arrangements, both of the connections may be hinge joints. In yet further alternative arrangements, one or both of the connections may be spherical bearings (i.e. ball joints).

Although it has been described that the casing assembly 42 is a casing assembly of a high pressure compressor, it may alternatively be a casing assembly of a low pressure compressor such as the low pressure compressor 14 described with reference to Figures 1 and 2.

Although it has been described that three unison rings are provided for three rows of vanes, any number of unison rings may be provided for any number of rows of vanes. For example, four unison rings may be provided for four rows of vanes. Such an arrangement may be used in a high pressure compressor 15 such as that described with reference to Figures 1 and 2, which typically comprise four rows of vanes. By way of further example, a unison ring assembly comprising a single unison ring may be provided for a single row of vanes, or a unison ring assembly comprising five unison rings may be provided for five rows of vanes.

Although it has been described that the first link 72 and the vane 50 are separate components, in alternative arrangements they may be formed integrally with each other. In such arrangements, as with the previously described arrangements, the first link comprises an elongate body extending away from the main body of the vane 50 (i.e. the aerofoil portion 70 of the vane 50) and the rotational axis 51 thereof.

Although the structure and operation of a single vane 50 and corresponding portions of the rest of the casing assembly 42 have been described, the remaining vanes and corresponding portions of the rest of the casing assembly 52 may be structured and operate in a similar manner.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A casing assembly (42) for a gas turbine engine (10), the casing assembly (42) comprising:
an annular casing (44) having a longitudinal axis (41);
a unison ring assembly (46) configured for rotation about the longitudinal axis (41);
a plurality of vanes (50) rotatably coupled to the annular casing (44); and
a plurality of linkages (48), wherein each of the plurality of vanes (50) is coupled to the unison ring assembly (46) by a respective one of the plurality of linkages (48), wherein each linkage (48) comprises:
a first link (72) coupled to the respective vane (50); and
a second link (74) rotatably coupled to the first link (72) and rotatably coupled to the unison ring assembly (46), such that rotation of the unison ring assembly (46) about the longitudinal axis (41) effects rotation of the respective vane (50).

2. The casing assembly (42) as claimed in Claim 1, wherein the unison ring assembly (46) is configured for movement on a single plane.

3. The casing assembly (42) as claimed in Claim 1 or Claim 2, wherein the second link (74) of each of the linkages (48) is rotatably coupled to its respective first link (72) about a first axis of rotation (82) that is substantially perpendicular to the longitudinal axis (41).

4. The casing assembly (42) as claimed in any one of the preceding claims, wherein the second link (74) of each of the linkages (48) is rotatably coupled to the unison ring assembly (46) about a second axis of rotation (92) that is substantially perpendicular to the longitudinal axis (41).

5. The casing assembly (42) as claimed in any one of the preceding claims, wherein the first link (72) of each of the linkages (48) is fixedly coupled to its respective vane (50).

6. The casing assembly (42) as claimed in any one of the preceding claims, wherein the second link (74) of each of the linkages (48) is rotatably coupled to its respective first link (72) and/or the unison ring assembly (46) by a hinge joint.

7. The casing assembly (42) as claimed in any one of the preceding claims, wherein the second link (74) of each of the linkages (48) is rotatably coupled to its respective first link (72) and/or the unison ring assembly (46) by a universal joint.

8. The casing assembly (42) as claimed in any one of the preceding claims, wherein the second link (74) of each of the linkages (48) is rotatably coupled to its respective first link (72) and/or the unison ring assembly (46) by a spherical joint.

9. The casing assembly (42) as claimed in any one of the preceding claims, wherein two or more of the first links (72) or two or more of the second links (74) have two or more different lengths.

10. The casing assembly (42) as claimed in any one of the preceding claims, wherein the unison ring assembly (46) comprises two or more unison rings (52, 54, 56) spaced from each other, wherein the second links (74) of each of the linkages (48) are rotatably coupled to the two or more unison rings (52, 54, 56).

11. The casing assembly (42) as claimed in Claim 10, wherein the two or more unison rings (52, 54, 56) are connected by one or more connecting rods (64).

12. The casing assembly (42) as claimed in Claim 10 or Claim 11, wherein each of the two or more unison rings (52, 54, 56) comprise a plurality of clevises (60), wherein the second links (74) of each of the linkages (48) are rotatably coupled to the unison ring assembly (46) via a respective one of the plurality of clevises (60).

13. The casing assembly (42) as claimed in any one of Claims 10 to 12, wherein each of the two or more unison rings (52, 54, 56) comprise a plurality of projections (62) extending towards the longitudinal axis (41), wherein the annular casing (44) comprises a plurality of grooves or slots (102) for receiving the plurality of projections (62) and locating the two or more unison rings (52, 54, 56) relative to the annular casing (44).

14. The casing assembly (42) as claimed in any one of Claims 10 to 13, wherein the two or more unison rings (52, 54, 56) are substantially planar.

15. A gas turbine engine (10) comprising a casing assembly (42) as claimed in any one of the preceding claims.
